# FASCICULE DE BREVET EUROPEEN

(11) **EP 0 558 408 B1**
(45) Date de publication et mention de la délivrance du brevet: **09.10.1996**
(21) Numéro de dépôt: 93400473.0
(22) Date de dépôt: 24.02.1993
(51) Int. Cl.: B60N 2/00

(54) **Sièges amovibles pour véhicule et véhicule équipé de tels sièges**
Auswechselbare Sitze für Fahrzeuge und Fahrzeuge mit solchen Sitzen
Removable seats for vehicle and vehicle equipped with such seats

(30) Priorité: 27.02.1992 FR 9202302
(43) Date de publication de la demande: 01.09.1993
(73) Titulaire: MATRA AUTOMOBILE, F-75116 Paris (FR)
(72) Inventeur: Escarguel, Hugues, F-91300 Massy (FR); Faligand, Jacky, F-78120 Rambouillet (FR); Baylac, Caroline, F-60200 Compiegne (FR)
(74) Mandataire: Fort, Jacques

(56) Documents cités:
- EP-A- 0 235 967
- US-A- 4 836 597
- PATENT ABSTRACTS OF JAPAN vol. 9, no. 67 (M-366)27 Mars 1985 & JP-A-59 199 337 (ISOMURA SATORU)
- PATENT ABSTRACTS OF JAPAN vol. 9, no. 60 (M-364)16 Mars 1985 & JP-A-59 195429 (ISOMURA SATORU)
- PATENT ABSTRACTS OF JAPAN vol. 9, no. 46 (M-360)27 Février 1985 & JP-A-59 186 747 (ISOMURA SATORU)
- PATENT ABSTRACTS OF JAPAN vol. 10, no. 155 (M-485)4 Juin 1986 & JP-A-61 009 352 (IKEDA BUTSUSAN)
- PATENT ABSTRACTS OF JAPAN vol. 9, no. 92 (M-373)20 Avril 1985 & JP-A-59 216 742 (SUSUKI MAMORU)

## Description

L'invention concerne les sièges de passagers pour véhicule, utilisables en particulier dans la ligne ou les lignes arrières de sièges, pouvant, suivant les besoins, être aisément installés pour offrir des places supplémentaires à volonté ou retirés pour libérer un volume de réception de bagages.

On connait déjà (FR-A-2556946, correspondant aux préambules des revendications indépendantes 1 et 12) de tels sièges, du type comprenant une assise, un dossier rabattable vers l'assise par basculement vers l'avant et un soubassement solidaire de l'assise et muni de moyens de fixation amovible au plancher du véhicule. Classiquement, le dossier et l'assise d'un tel siège ont un rembourrage en mousse synthétique soutenu par un treillis métallique à ressorts et recouvert d'un revêtement textile, synthétique ou organique. L'encombrement du rembourrage et du treillis limite le degré de repliement qui, dans les cas où il est complet, ne donne pas de stabilité à la position de l'envers du dossier, par suite de l'élasticité de l'appui rembourrage contre rembourrage. De plus, l'ensemble est relativement lourd.

On connait également (EP-A-0 235 967) un siège d'automobile dont le rembourrage de dossier contient des poches étanches dans lesquelles on peut ajuster une pression de gaz pour assurer le de confort de l'occupant.

L'invention vise notamment à fournir un siège du type ci-dessus répondant mieux que ceux antérieurement connus aux exigences de la pratique, notamment en ce qu'il est plus léger et en ce qu'on peut lui donner, si on le souhaite, une constitution telle que le siège replié constitue un ensemble aisément manipulable et stockable dans un espace restreint.

Dans ce but, l'invention propose notamment un siège selon la revendication 1.

L'assise et le dossier peuvent recevoir une poche unique, munie d'un soufflet à l'emplacement de repliement pour permettre de rabattre totalement le dossier. En général toutefois, l'assise et le dossier comporteront chacun une seule poche indépendante de support. Pour augmenter encore le confort, on peut cependant prévoir plusieurs poches, dans lesquelles la pression est indépendamment réglable. On peut ainsi ajuster séparément des appuis au niveau des épaules, au niveau lombaire, et latéraux pour constituer un siège baquet.

Une ou plusieurs des poches peuvent contenir un rembourrage de secours, de volume très inférieur à celui de la poche à l'état gonflé, ne gênant pas le repliement complet du dossier. Il est également possible de prévoir, sur la partie de la poche servant d'appui à l'utilisateur, un rembourrage, d'épaisseur faible comparé à celle de la poche à l'état gonflé, muni d'un revêtement (par exemple en tissu, cuir ou matière synthétique) offrant un confort et une apparence supérieures à ceux de la toile étanche ou de l'ensemble textile-élastomère constituant la paroi de la poche.

Les coques du dossier et de l'assise sont avantageusement prévues pour pouvoir s'appliquer l'une contre l'autre par basculement complet du dossier lorsque les poches sont dégonflées. Le siège constitue alors un colis rigide, éventuellement muni de roulettes et/ou d'une ou plusieurs poignées escamotables. Le siège replié et en place offre alors une surface de réception rigide et stable du fait de l'appui coque contre coque, pouvant être plane et horizontale sur une largeur importante.

Les poches peuvent être alimentées en gaz comprimé à partir d'une bouteille rechargeable prévue sur le siège. Il est cependant bien préférable de munir le siège d'un connecteur destiné à s'engager dans un connecteur complémentaire, auto-obturable, prévu soit sur la coque du siège soit sur le plancher du véhicule. Ce dernier est alors équipé d'un réseau de canalisation distribuant du gaz sous une pression de quelques bars. Dans la pratique, la complication ainsi apportée au véhicule est réduite, car beaucoup de véhicules de haut de gamme ou du type monospace ont déjà un compresseur.

Suivant un autre apport de l'invention, pouvant être utilisé séparément de ce qui précède, le soubassement est constitué par des pieds déplaçables par basculement sur une coque de l'assise, entre une position déployée de fixation au plancher d'un véhicule et une position escamotée dans des alvéoles ménagées dans la coque de l'assise. Lorsque cette disposition est utilisée sur un siège ayant deux coques venant s'appuyer l'une contre l'autre, le siège replié se présente comme une valise aisément manipulable. L'une au moins des coques peut alors comporter des moyens permettant de verrouiller le siège à l'état fermé et/ou des moyens mécaniques de solidarisation temporaire de plusieurs sièges repliés.

La constitution de l'assise et/ou du dossier en une coque et une poche étanche gonflable peut être étendue à la constitution d'un appui-tête, d'un accoudoir et/ou d'une tablette. La poche constituant un ou plusieurs de ces éléments peut être gonflable indépendamment ou non des poches du siège proprement dit.

L'invention sera mieux comprise à la lecture de la description qui suit de modes particuliers de réalisation, donnés à titre d'exemple non limitatif. La description se réfère aux dessins qui l'accompagnent, dans lesquels :
- la figure 1 montre schématiquement, en élévation, un siège comportant d'une part des poches gonflables et d'autre part un soubassement constitué de pieds repliables, suivant un premier mode de réalisation ;
- la figure 1A est une vue en coupe partielle suivant la ligne I-I de la figure 1 ;
- la figure 2 est une vue de face du siège de la figure 1 ;
- les figures 3 et 4, respectivement similaires aux figures 1 et 2 montrent un siège à pieds repliables de façon différente de celle des figures 1 et 2, ce siège ayant un appui-tête ;
- la figure 5, similaire à la figure 3, montre le siège basculé vers l'avant ;
- la figure 6, similaire à la figure 3, montre une variante de réalisation ;
- la figure 7 est une vue en élévation montrant le siège de la figure 1 alors que les poches sont dégonflées et le dossier rabattu sur l'assise ;
- la figure 8, similaire à la figure 6, montre le siège replié avec les pieds escamotés ;
- la figure 9 est une vue de gauche de la figure 8;
- la figure 10 montre un mode possible de rangement des sièges repliés dans un véhicule ;
- les figures 11 et 12 montrent, respectivement en élévation et en vue depuis l'avant des sièges, un mode possible de solidarisation entre sièges repliés ;
- les figure 13 et 14 montrent d'autres modes de rangement possibles ;
- les figures 15 et 16 montrent schématiquement des sièges munis d'un appui-tête et d'un accoudoir gonflable ;
- la figure 17 est un schéma de principe d'un circuit pneumatique d'alimentation des poches d'un siège ;
- la figure 18 est une vue en perspective montrant un mode de réalisation possible du système de verrouillage d'un pied sur le plancher d'un véhicule.

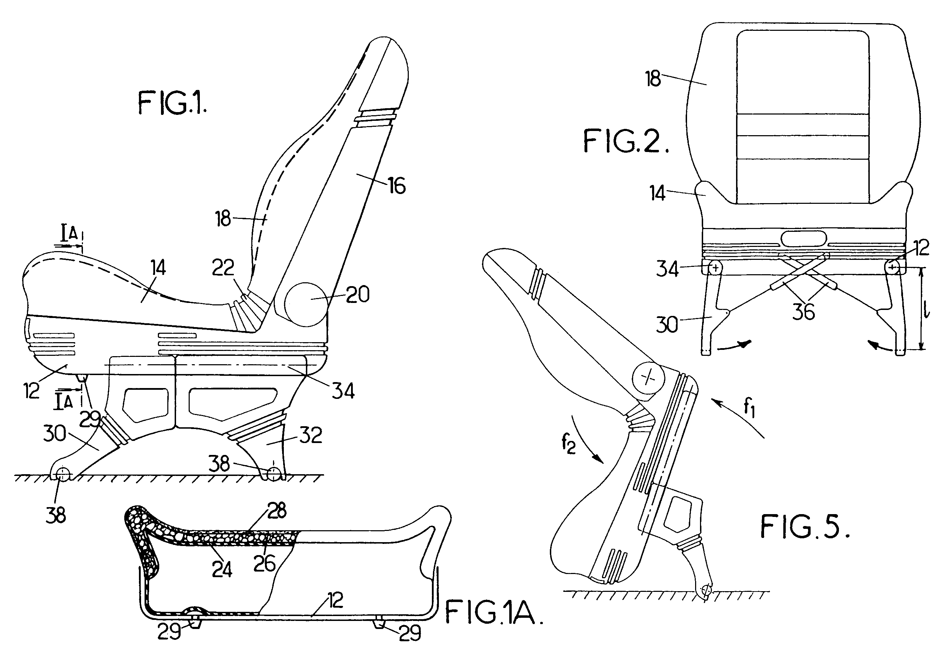

Le siège dont la constitution de principe est montrée en figures 1, 1A et 2 peut être regardé comme ayant une assise, un dossier et un soubassement. L'assise est constituée d'une coque 12 rigide, par exemple en alliage d'aluminium, ouverte vers le haut et d'une poche 14 posée dans la cavité de la coque.

Le dossier a une constitution similaire. Il comporte une coque 16 et une poche 18. La coque 16 est articulée sur la coque 12 par un mécanisme 20 de réglage d'inclinaison autour d'un axe de basculement, qui peut être de type traditionnel. La poche 18 est avantageusement reliée à la poche 14 par un soufflet 22 qui aide à maintenir en place les poches et garantit un repliement sans coincement lors du basculement du dossier vers l'assise. Dans une variante de réalisation, un seul de l'assise et du dossier est constitué par une coque et une poche, l'autre élément du siège étant de constitution traditionnelle.

La poche ou chaque poche peut être constituée par un sac en toile imperméable ayant par exemple une texture comparable à celle servant à la fabrication de canots pneumatiques ou de matelas pneumatiques, en fractions assemblées, découpées de façon à donner à la poche un galbe approprié à l'état gonflé. Surtout lorsque la toile présente un certain degré d'élasticité, la forme peut être modifiée en ajustant la pression gonflable, comme cela est indiqué en tirets sur la figure 1. L'utilisateur peut ainsi adapter le siège à sa morphologie et à son poids. L'adaptabilité peut encore être accrue en prévoyant plus de deux poches et des moyens pour y régler indépendamment la pression. Cette pression sera généralement comprise entre 0,2 et 2 bars au dessus de la pression atmosphérique.

Dans une variante de réalisation, chaque poche est délimitée par la coque elle-même et par une toile dont les bords sont reliés de façon étanche à la coque.

Pour améliorer le confort de contact de l'utilisateur, il est avantageux de recouvrir la toile d'un doublage dans la partie servant d'appui au corps. Dans le cas montré sur la figure 1A, la toile 24 est recouverte d'un doublage ayant une épaisseur de 1 à 3 cm, comprenant un rembourrage en mousse 26 (matériau expansé) et un revêtement 28 en textile organique ou synthétique, d'un genre déjà utilisé pour la réalisation' des sièges. Un tel doublage permet aussi l'emploi provisoire du siège dans des conditions acceptables en l'absence de gonflage.

Il est également possible de prévoir un rembourrage ou un capitonnage de faible épaisseur à l'intérieur même de la poche, surtout lorsqu'elle est délimitée par la coque elle-même, les bords de la toile supérieure étant fixés à la coque.

L'emboîtement de la poche, lorsqu'elle constitue un sac séparable de la coque, la maintient en place. Il est cependant préférable de compléter l'emboîtement par des moyens mécaniques. Ces moyens peuvent être par exemple des pastilles collées sur la face inférieure de la poche et portant des pions 29 qui pénètrent dans les trous de la coque et y sont retenus par des moyens aisément dégageables, tels que des doigts élastiques (figures 1 et 1A).

Chaque poche comporte également un embout d'alimentation à partir d'une installation de fourniture de gaz comprimé. Divers modes de réalisation d'une telle installation seront décrits plus loin.

La liaison entre la coque 12 de l'assise et le plancher du véhicule s'effectue par l'intermédiaire d'un soubassement comprenant plusieurs pieds munis de moyens aisément démontables de verrouillage au plancher. Ces moyens peuvent être du type décrit dans le document FR-A-2 556 946 ou être d'un autre type, tel que celui qui sera décrit plus loin.

On décrira maintenant diverses constitutions de soubassement permettant de réduire l'encombrement des sièges en vue de leur stockage, lorsqu'ils ne sont pas utilisés. Les diverses constitutions qui seront décrites sont utilisables indépendamment de celles qui précèdent mais ont un intérêt tout particulier lorsqu'elles sont employées en combinaison.

Dans le mode de réalisation montré en figures 1 et 2, le soubassement comporte quatre pieds indépendants, à savoir deux pieds avant 30 et deux pieds arrière 32. Tous les pieds sont déplaçables entre la position déployée où ils sont montrés sur les figures 1 et 2 et une position rétractée où ils sont escamotés dans des alvéoles prévus dans la face inférieure de la coque 12. Les deux pieds 30 et 32 placés d'un même côté du siège tournent autour d'un même axe longitudinal 34. Ils ont une longueur l ne dépassant pas la demi-largeur du siège entre les axes 34. Des ressorts pneumatiques ou mécaniques 36 peuvent être prévus pour les maintenir dans la position repliée où ils ne débordent pas de l'enveloppe de la coque 12. Les pieds se terminent par des moyens 38 appartenant à un mécanisme de verrouillage désarmable, permettant de solidariser les pieds du plancher d'un véhicule.

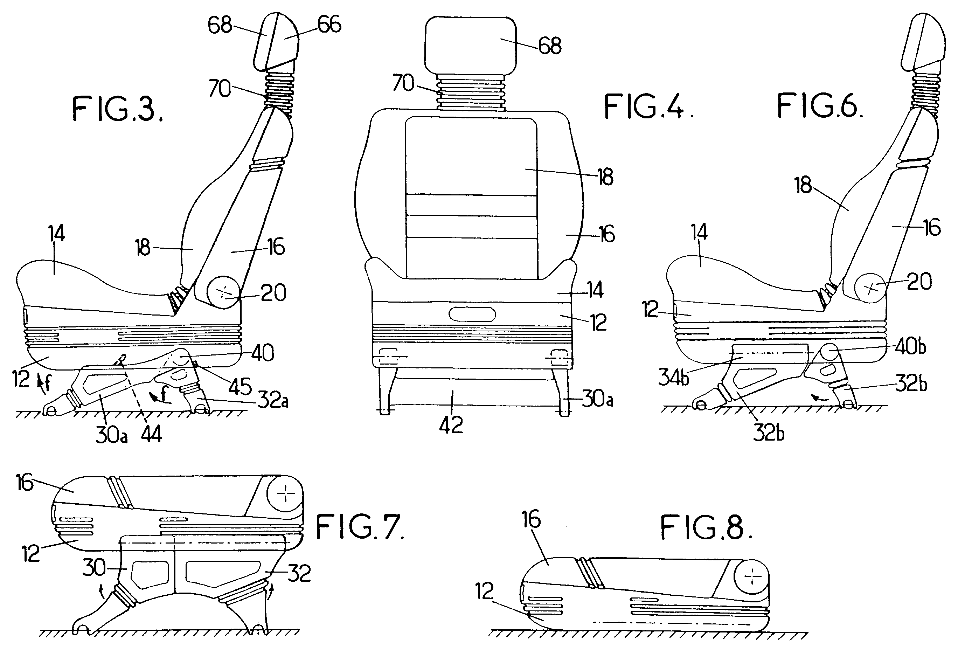

Dans le mode de réalisation montré en figures 3 à 5, qui exige généralement un encombrement vertical de la coque 12 supérieur à celui requis pour la solution de la figure 1, les pieds avant 30a et les pieds arrière 32a sont articulés autour d'un même axe 40 transversal au véhicule, matérialisé par deux paliers prévus dans la coque 12, dans le partie arrière de cette dernière. Les deux pieds 30a peuvent être solidarisés par une traverse 42. Une traverse similaire peut relier les pieds arrière, prévus pour s'appuyer contre les pieds avant 30a lorsque les pieds sont déployés. La coque 12 est reliée aux pieds avant 30a par des moyens d'arc-boutement effaçables, tels que des ciseaux déployables ou un vérin verrouillable, ou bien un verrou mécanique 44 désarmable retient les pieds avant lors de l'utilisation. Des butées 45 empêchent les pieds arrière 32a de basculer vers l'arrière.

Dans le cas des figures 3 et 4, l'escamotage s'effectue par repliement vers l'avant des pieds, comme indiqué par les flèches f sur la figure 3. Les pieds s'escamotent alors dans des saignées prévues dans la coque 12, parallèlement aux côtés de la coque. On peut également basculer l'ensemble du siège vers l'avant comme indiqué par la flèche f1 sur la figure 5, après repliement du dossier sur l'assise (flèche f2). On peut également libérer un espace supplémentaire en rabattant le dossier avant d'escamoter les pieds arrière et de basculer le siège.

Le mode de réalisation montré en figure 6 se différencie de celui des figures 3 et 4 par le fait que les pieds avant 32 s'escamotent par basculement autour d'un axe longitudinal 34b alors que les sièges arrière s'escamotent par basculement autour d'un axe transversal 40b. Les deux pieds 30b et 32b se trouvant d'un même côté du siège sont encore indépendants, mais les deux pieds 32b peuvent être reliés par une traverse.

La constitution de chacun des sièges qui viennent d'être décrits permet de prévoir, sur la coque de chaque assise, deux points d'ancrage de ceinture, le troisième point d'ancrage (point d'ancrage haut) restant prévu sur la carrosserie d'un véhicule.

Chacun des sièges qui viennent d'être décrits peut être ramené à l'état d'un caisson rigide et manipulable en bloc, en vue du stockage, du transport ou d'une réduction d'encombrement.

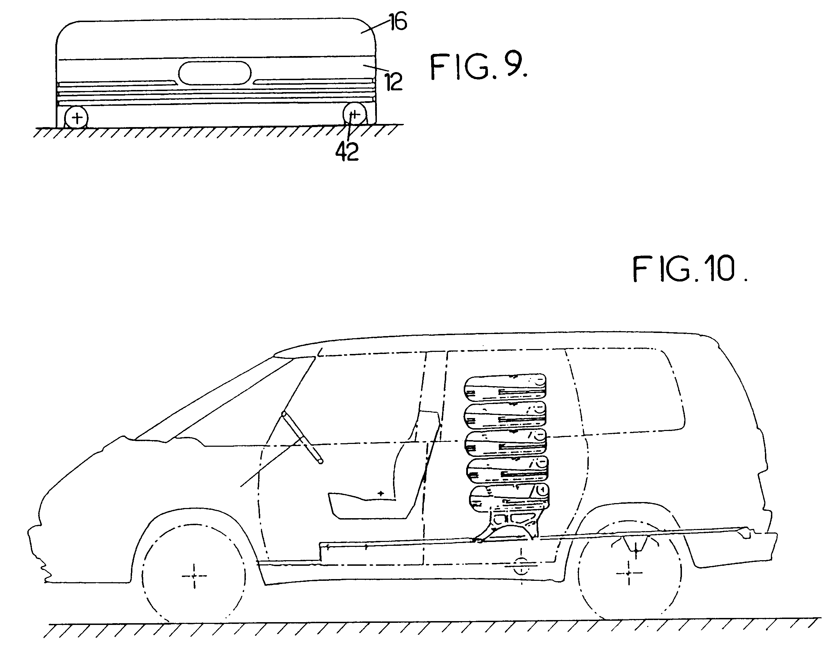

La figure 7 montre par exemple le siège de la figure 1 après dégonflage des poches et basculement du dossier sur l'assise, ce qui fournit une surface d'appui plane et stable du fait du contact direct entre les coques 12 et 16. Lorsque le siège est retournable, la disposition des pieds 30 et 32 peut être inversée. Pour réduire encore le volume, les pieds peuvent être escamotés (figures 8 et 9). Des roulettes 42 peuvent être prévues pour faciliter les manutentions , ainsi qu'une poignée.

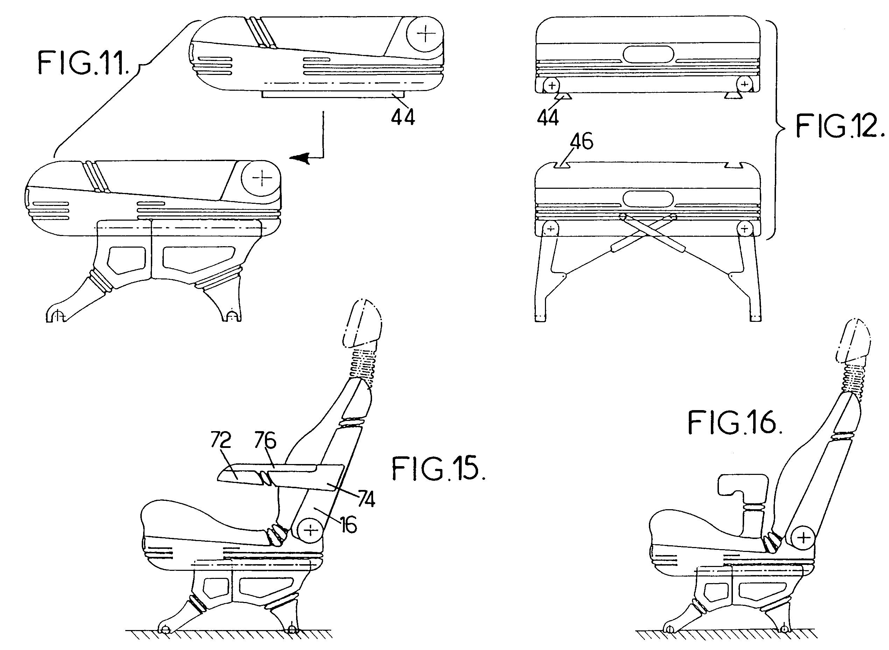

A l'état replié, les sièges sont aisément empiles dans un véhicule ou sur lui. La figure 10 montre cinq sièges empilés verticalement ; les pieds du siège le plus bas restent déployés et fixés au plancher, éventuellement en position retournée. Pour éviter que les sièges ne glissent les uns sur les autres, les coques peuvent être munies de moyens permettant de les solidariser temporairement. Dans le cas illustré en figures 11 et 12, ces moyens sont des tenons 44 et mortaises 46 d'un assemblage à queue d'aronde, permettant d'assembler les sièges repliés par déplacement suivant la flèche f2. D'autres modes d'assemblage, par exemple par engagement à force de pions dans des trous ou par grenouillères, sont possibles. De plus, des moyens de verrouillage des coques d'un même siège l'une sur l'autre peuvent être prévus.

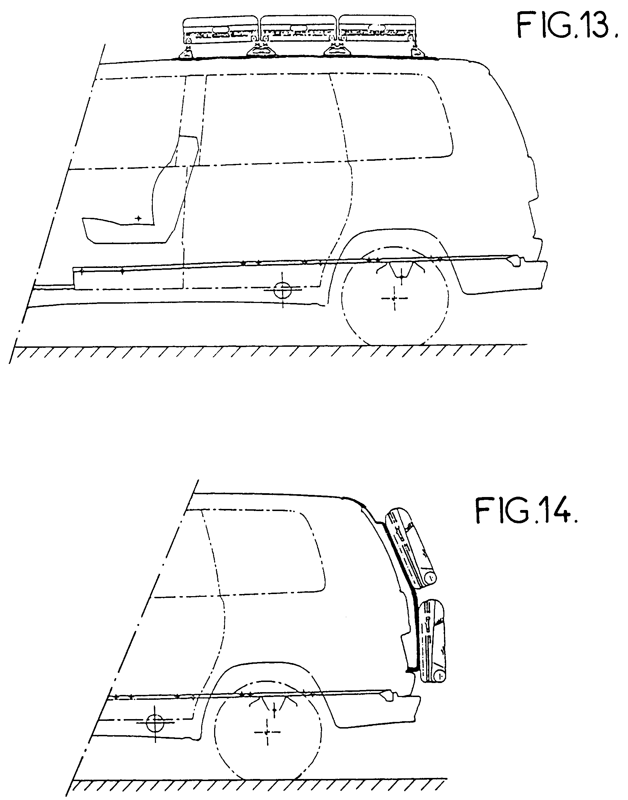

Les figures 13 et 14 montrent d'autres modes de rangement possibles, cette fois sur une galerie extérieure 48; ils ne sont pas limitatifs. A condition de prévoir une galerie adaptée, les sièges peuvent être bloqués sur la galerie à l'aide d'une serrure, pour éviter les vols.

La mise en oeuvre de l'invention n'interdit nullement de prévoir un appui-tête. Cet appui-tête peut avoir une constitution similaires à celle du dossier. Les figures 3 et 4 montrent un appui-tête constitué d'une coque rigide 66 et d'une poche gonflable 68. L'appui-tête est relié au dossier par un soufflet 70 gonflable, avantageusement constitué de façon à avoir une rigidité en flexion élevée à l'état gonflé. La section droite du soufflet représenté en figures 3 et 4 est rectangulaire, plus large que longue, ce qui sera le cas général. La hauteur du soufflet peut être ajustable soit par réglage du volume d'air introduit, soit en adjoignant au soufflet un tirant externe ou interne commandable pour limiter la longueur du déploiement. Le soufflet peut se raccorder à la poche 18 du dossier par une échancrure dans la coque 16 et peut être prévu pour s'escamoter dans la coque 16 par repliement vers l'avant lorsque l'appui-tête et la poche 16 sont dégonflés. L'appui-tête peut également être dépourvu de coque, la poche étant alors au moins partiellement constituée en panneaux de tissu inextensible découpés pour lui donner une forme déterminée.

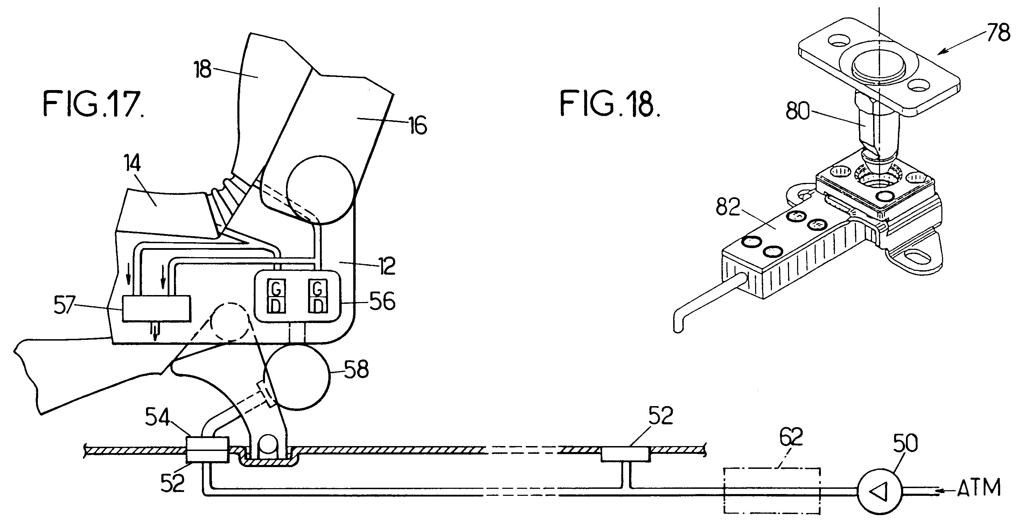

Il est également possible de munir le siège d'un accoudoir et/ou d'une tablette gonflables et escamotables. La figure 15 montre un tel accoudoir ayant une coque 72 pouvant être basculée sur le dossier autour d'un axe 74, entre la position d'utilisation où elle est représentée et une position de stockage le long de la coque 16 du dossier. La coque contient alors une poche gonflable 76. Dans une variante, l'accoudoir se limite à une enveloppe gonflable. Dans une autre (figure 16) l'accoudoir gonflable 77 est relié à l'assise du siège.

Comme on l'a indiqué plus haut, l'alimentation en gaz comprimé des poches du siège peut s'effectuer à partir d'une source portée par le siège, constituée par exemple par une bouteille de gaz sous pression. Toutefois il est plus avantageux d'alimenter les poches à partir d'une canalisation portée par le plancher du véhicule. La figure 17 montre une telle installation, comprenant un compresseur 50 fournissant de l'air, par exemple sous 8 bars, à un réseau de conduites ayant des branchements terminés chacun par un connecteur auto-obturant 52. Chaque siège porte alors un connecteur complémentaire 54 alimentant une boîte de vannes de distribution à trois voies 56, à commande manuelle, éventuellement par l'intermédiaire d'un bidon de réserve 58. La boîte de distribution 56 peut être située sur une des faces latérales de la coque 12 de l'assise. Avec ce mode d'alimentation, un clapet anti-retour 60 est prévu entre le connecteur 54 et le bidon.

Chaque connecteur 54 peut par exemple être monté sur un pied du siège de façon à s'engager automatiquement sur le connecteur complémentaire 52 lors de la mise en place du siège. Il est dans ce cas relié à la boîte 56 par une conduite souple.

Chacune des vannes de distribution de la boîte 56 est prévue pour alimenter une des poches du siège et elle est commandée par un bouton poussoir. Au repos, chaque vanne isole la poche correspondante. Dans une position de gonflage (bouton G enfoncé), la vanne relie la poche au connecteur 54. Dans une position de dégonflage (appui sur D), la vanne relie la poche à l'atmosphère. Il est préférable de munir le réseau des conduites alimentant les poches du siège d'un bloc de soupapes de sécurité 57 limitant la pression dans les poches, par exemple à 3 bars.

Lorsque le siège doit être replié, les poches sont dégonflées par mise à l'atmosphère à l'aide de la boîte de distribution 56. Des sangles élastiques peuvent être prévues à l'intérieur de chaque poche pour ramener la toile qui délimite la poche à l'intérieur du volume délimité par la coque.

La constitution ci-dessus décrite permet d'ajuster la dureté et/ou la forme des poches. L'installation embarquée sur le véhicule peut être prévue pour permettre également un réglage de température en interposant, sur l'alimentation des branchements, une unité de conditionnement d'air 62 ou en utilisant un branchement à partir de la sortie de l'unité de conditionnement d'air équipant l'habitacle. Dans ce cas, pour qu'il y ait une circulation d'air à l'intérieur des poches, une fuite calibrée peut être prévue, par exemple en utilisant une soupape de sécurité 57 appropriée tarable à la pression souhaitée dans les poches et reliée à un emplacement des poches tel qu'il y ait circulation.

Divers moyens de verrouillage amovibles du soubassement peuvent être utilisés, bien que la solution décrite dans le document FR-A-2 556 946 apparaisse avantageuse. La figure 18 montre, à titre d'exemple, un verrou à commande électrique ou pneumatique pouvant équiper les pieds avant ou arrière (les deux autres étant alors emprisonnés ou dégagés par basculement) ou les quatre pieds. Ce verrou 78 comporte un doigt 80 à bout conique fixé au pied respectif, muni d'une encoche de retenue à profil dissymétrique et une serrure 79 fixée au plancher du véhicule, de préférence dans un renfoncement pour ne pas constituer une saillie gênante. La serrrure comporte un boîtier percé d'un trou d'introduction du doigt 80 et une came refoulée par des moyens élastiques vers une position de verrouillage du doigt. La came est attelée à un équipage mobile d'un électro-aimant 82 dont l'excitation rétracte la came et libère le doigt. Le verrou peut aussi bien être à commande pneumatique ou même manuelle. La répartition entre siège et plancher peut être inversée. Il est préférable de constituer la serrure 79 de façon à n'autoriser la libération du siège que moteur à l'arrêt et/ou avec au moins une porte ouverte.

## Revendications

1. Siège amovible de véhicule comprenant une assise, un dossier rabattable sur l'assise par basculement vers l'avant et un soubassement solidaire de l'assise et muni de moyens de fixation amovible au plancher du véhicule, caractérisé en ce que l'assise et le dossier ont des coques respectives qui s'appliquent l'une contre l'autre à l'etat rabattu et en ce que l'un au moins de l'assise et du dossier est constitué par sa coque rigide (12,16), ouverte côté utilisateur, et au moins une poche étanche (14,18) portée par la coque et munie de moyens de réglage de la pression d'un gaz occupant la poche.

2. Siège selon la revendication 1, caractérisé en ce que la poche est posée dans la coque ou présente des bords fixés de façon étanche à la coque pour constituer un compartiment fermé.

3. Siège selon la revendication 2, caractérisé en ce que l'une au moins des poches contient un rembourrage de secours de volume très inférieur à celui de la poche à l'état gonflé.

4. Siège selon la revendication 1, 2 ou 3, caractérisé en ce que la partie de la poche servant d'appui à l'utilisateur comprend un doublage extérieur d'épaisseur faible comparée à celle de la poche à état gonflée, ayant un revêtement (28) et un rembourrage (26) en contact avec une toile (24) imperméable délimitant la poche.

5. Siège selon l'une quelconque des revendications précédentes, caractérisé en ce que la coque (12) de l'assise et la coque (16) du dossier sont prévues pour s'appliquer l'une contre l'autre par basculement complet pour constituer un colis rigide manipulable, éventuellement muni de roulettes et d'une poignée.

6. Siège selon l'une quelconque des revendications précédentes, caractérisé en ce qu'il est muni d'au moins un connecteur pneumatique (54) de raccordement avec un connecteur (52) d'alimentation en gaz comprimé, à auto-obturation et ouverture forcée par accouplement des connecteurs (52,54).

7. Siège selon l'une quelconque des revendications précédentes, caractérisé en ce que le soubassement comprend des pieds (30,32) déplaçables par basculement par rapport à l'assise entre une position déployée de fixation au plancher et une position escamotée dans un alvéole prévu dans la coque de l'assise.

8. Siège selon la revendication 7, caractérisé en ce que les pieds (30,32) sont montés basculants autour d'un axe sensiblement parallèle ou perpendiculaire à la longueur du véhicule.

9. Siège selon la revendication 8, caractérisé en ce que le soubassement comprend deux pieds avant (30a) et deux pieds arrière (32a) articulés autour d'un même axe (40) orthogonal à la longueur du véhicule, placé dans la moitié arrière de l'assise, les pieds avant ayant des moyens escamotables d'appui de l'avant de la coque de l'assise.

10. Siège selon la revendication 7, caractérisé en ce que le soubassement comprend deux pieds avant (30b) articulés autour d'axes (34b) parallèles à la longueur du véhicule et deux pieds arrière (32b) solidarisés l'un de l'autre et tournant autour d'un axe (40) orthogonal à la longueur du véhicule.

11. Siège selon l'une quelconque des revendications précédentes, caractérisé en ce qu'il comprend de plus au moins un accoudoir gonflable ou un appui-tête constitué par une enveloppe gonflable reliée au dossier par un support gonflable, dont la longueur est éventuellement réglable par un tirant.

12. Siège amovible de véhicule comprenant une assise, un dossier rabattable sur l'assise par basculement vers l'avant et un soubassement solidaire de l'assise et muni de moyens de fixation amovible au plancher du véhicule, caractérisé en ce que l'assise et le dossier comportent l'une et l'autre une coque rigide (12,16), en ce que les deux coques sont prévues pour pouvoir s'appliquer l'une contre l'autre par basculement du dossier et en ce que le soubassement comprend des pieds avant et arriere déplaçables les uns et les autres, par basculement par rapport à l'assise, entre une position déployée de fixation amovible au plancher d'un véhicule et une position escamotée dans des alvéoles prévus dans la coque (12) de l'assise.

13. Véhicule comprenant au moins un siège suivant l'une quelconque des revendications 1 à 11, caractérisé en ce qu'il comporte un plancher muni de canalisations d'alimentation en gaz comprimé à partir d'une source prévue sur le véhicule, lesdites canalisations étant terminées par des connecteurs auto-obturables de liaison avec le siège.

## Claims

1. Removable vehicle seat comprising a seat portion, a back which can be folded down onto the seat portion by pivoting forwardly, and a substructure fixed to the seat portion and provided with means for removably fixing to the floor of the vehicle, characterized in that the seat portion and the back have respective shells which are placed against one another in the folded-down condition, and in that at least one of the seat portion and the back is constituted by its rigid shell (12, 16) which is open on the user side and at least one leaktight pouch (14, 18) carried by the shell and provided with means for adjusting the pressure of a gas occupying the pouch.

2. Seat according to Claim 1, characterized in that the pouch is disposed in the shell or has edges fixed to the shell in a leaktight manner so as to constitute a closed compartment.

3. Seat according to Claim 2, characterized in that at least one of the pouches contains a safety padding of a volume much smaller than that of the pouch in the inflated condition.

4. Seat according to any one of Claims 1, 2, and 3, characterized in that the part of the pouch which serves to support the user comprises an outer covering which is thin in comparison with the pouch in the inflated condition and has a cover (28) and a padding (26) in contact with an impermeable cloth (24) delimiting the pouch.

5. Seat according to any one of the preceding claims, characterized in that the shell (12) of the seat portion and the shell (16) of the back are arranged to be placed against one another by pivoting completely to form a rigid package which can be handled and may possibly be provided with wheels and a handle.

6. Seat according to any one of the preceding claims, characterized in that it has at least one pneumatic connector (54) for connection to a self-sealing compressed-gas supply connector (52) which is forced open by the coupling of the connectors (52, 54).

7. Seat according to any one of the preceding claims, characterized in that the substructure comprises feet (30, 32) which can be moved by pivoting relative to the seat portion between an extended position for fixing to the floor and a retracted position in a cavity provided in the shell of the seat portion.

8. Seat according to Claim 7, characterized in that the feet (30, 32) are mounted for pivoting about an axis substantially parallel or perpendicular to the length of the vehicle.

9. Seat according to Claim 8, characterized in that the substructure comprises two front feet (30a) and two rear feet (32a) articulated about the same axis (40) perpendicular to the length of the vehicle and disposed in the rear half of the seat, the front feet having retractable means for supporting the front of the shell of the seat portion.

10. Seat according to Claim 7, characterized in that the substructure comprises two front feet (30b) articulated about axes (34b) parallel to the length of the vehicle and two rear feet (32b) fixed to one another and pivotable about an axis (40) perpendicular to the length of the vehicle.

11. Seat according to any one of the preceding claims, characterized in that it also comprises at least one inflatable arm-rest or head-rest constituted by an inflatable envelope connected to the back by means of an inflatable support the length of which may possibly be adjustable by means of a tie rod.

12. Removable vehicle seat comprising a seat portion, a back which can be folded down onto the seat portion by pivoting forwardly, and a substructure fixed to the seat portion and provided with means for removable fixing to the floor of the vehicle, characterized in that both the seat portion and the back comprise rigid shells (12, 16), and in that the two shells are arranged so that they can be placed against one another by pivoting of the back, and in that the substructure comprises front and rear feet, all of which are movable by pivoting relative to the seat portion between an extended position for removable fixing to the floor of a vehicle and a retracted position in cavities provided in the shell (12) of the seat portion.

13. Vehicle comprising at least one seat according to any one of Claims 1 to 11, characterized in that it comprises a floor provided with ducts for supplying compressed gas from a source provided in the vehicle, the said ducts terminating in self-sealing connectors for connection to the seat.

## Patentansprüche

1. Auswechselbarer Fahrzeugsitz mit einem Sitzteil, einer durch Umklappen nach vorne auf den Sitzteil klappbaren Sitzlehne und einen mit dem Sitzteil einstückigen Sockel, der mit Mitteln zur lösbaren Befestigung am Fahrzeugboden versehen ist, **dadurch gekennzeichnet, daß** der Sitzteil und die Sitzlehne entsprechende Schalen aufweisen, die im zusammengeklappten Zustand aneinander anliegen, und daß zumindest entweder den Sitzteil oder die Sitzlehne ansich durch eine starre, zur Benutzerseite hin offene Schale (12, 16) und zumindest eine abgedichtete Tasche (14, 18) gebildet ist, die von der Schale getragen und mit Druckregulierungseinrichtungen für ein die Tasche ausfüllendes Gas versehen ist.

2. Sitz nach Anspruch 1, **dadurch gekennzeichnet, daß** die Tasche in der Schale angeordnet ist oder Kanten hat, die in abgedichteter Weise an der Schale befestigt sind, um eine geschlossene Kammer zu bilden.

3. Sitz nach Anspruch 2, **dadurch gekennzeichnet, daß** zumindest eine der Taschen eine Sicherheitsfüllung mit einem Volumen aufweist, das erheblich geringer als das der Tasche in aufgeblähtem Zustand ist.

4. Sitz nach Anspruch 1, 2 oder 3, **dadurch gekennzeichnet, daß** der Teil der Tasche, der als Abstützung für den Anwender dient, eine äußere Auflage aufweist, die im Vergleich zu der Tasche im aufgeblähten Zustand eine geringere Dicke besitzt, wobei sie einen Überzug (28) und eine Füllung (26) aufweist, die in Kontakt mit einem undurchlässigen, die Tasche begrenzenden Tuch (24) steht.

5. Sitz nach einem der vorhergehenden Ansprüche, **dadurch gekennzeichnet, daß** die Schale (12) des Sitzteils und die Schale (16) der Sitzlehne so ausgebildet sind, daß die eine durch vollständiges Umklappen so gegen die andere paßt, daß sie ein starres handhabbares Paket bilden, das mit Fußrollen und einem Handgriff versehen sein kann.

6. Sitz nach einem der vorhergehenden Ansprüche, **dadurch gekennzeichnet, daß** er mit wenigstens einein pneumatischen Verbindungsstück (54) zum Anschluß an ein Druckgas-Speiseverbindungsstück (52) mit Selbstabsperrung und Zwangsöffnung durch Ankoppeln der Verbindungsstücke (52, 54) versehen ist.

7. Sitz nach einem der vorhergehenden Ansprüche, **dadurch gekennzeichnet, daß** der Sockel Füße (30, 32) aufweist, die durch Umklappen bezüglich des Sitzteils zwischen einer ausgeklappten Stellung zur Befestigung am Boden und einer eingeklappten Stellung verstellt werden können, in welcher sie in eine Kammer des Sitzteils aufgenommen werden.

8. Sitz nach Anspruch 7, **dadurch gekennzeichnet, daß** die Füße (30, 32) um eine im wesentlichen zur Fahrzeuglänge parallele oder senkrechte Achse kippbar angeordnet sind.

9. Sitz nach Anspruch 8, **dadurch gekennzeichnet, daß** der Sockel zwei vordere Füße (30a) und zwei hintere Füße (32a) aufweist, die um dieselbe zur Fahrzeuglänge orthogonale, in der hinteren Mitte des Sitzteils angeordnete Achse (40) schwenkbar sind, aufweist, wobei die vorderen Füße einziehbare Stützvorrichtungen für die Sitzteilschale von vorne haben.

10. Sitz nach Anspruch 7, **dadurch gekennzeichnet, daß** der Sockel zwei vordere Füße (30b), die um zur Fahrzeuglänge parallele Achsen (34b) schwenkbar sind, und zwei miteinander verbundene, um eine zur Fahrzeugslängsrichtung orthogonale Achse (40) drehbare hintere Füße (32b).

11. Sitz nach einem der vorhergehenden Ansprüche, **dadurch gekennzeichnet, daß** er zudem zumindest ein aufblähbare Seitenlehne oder eine von einer aufblähbaren Hülle gebildete Kopfstütze aufweist, die über eine aufblähbare Stütze, deren Länge durch einen Zugstab regulierbar sein kann, mit dem Rücken verbunden ist.

12. Auswechselbarer Fahrzeugsitz mit einem Sitzteil, einer durch Umklappen nach vorne auf den Sitzteil klappbaren Sitzlehne und einen mit dem Sitzteil einstückigen Sockel, der mit Mitteln zur lösbaren Befestigung am Fahrzeugboden versehen ist, **dadurch gekennzeichnet, daß** der Sitzteil und die Sitzlehne jeweils entsprechende starre Schalen (12, 16) aufweisen und daß die beiden Schalen so ausgebildet sind, daß die eine durch Umklappen des Rückens gegen die andere paßt, und daß der Sockel durch Umklappen nach vorne oder hinten bezüglich des Sitzteils zwischen einer ausgeklappten Position zur lösbaren Befestigung am Fahrzeugboden und einer in einer in der Sitzteilschale (12) vorgesehenen Kammer eingeklappten Position verstellbare Füße aufweist.

13. Fahrzeug, das wenigstens einen Sitz nach einem der Ansprüche 1 bis 11 aufweist, **dadurch gekennzeichnet, daß** es einen mit Gasspeiserohren für ein Druckgas aus einer im Wagen vorgesehenen Quelle versehenen Boden aufweist, wobei die Rohre in selbstschließenden Verbindungsstücken zur Verbindung mit dem Sitz enden.
